# EUROPEAN PATENT APPLICATION

(11) **EP 3 825 614 A1**
(43) Date of publication of application: **26.05.2021**
(21) Application number: 19210936.1
(22) Date of filing: 22.11.2019
(51) Int. Cl.: F24D 10/00, F24D 19/10

(54) **METHOD FOR CONTROLLING A FLOW OF HEAT TRANSFER FLUID IN A DISTRICT HEATING/COOLING GRID, CONTROL UNIT AND SYSTEM**

(71) Applicant: E.ON Sverige AB, 205 09 Malmö (SE)
(72) Inventor: Rosén, Per, 227 33 Lund (SE); Skogström, Jacob, 234 42 Lomma (SE); Carlström, Helen, 237 36 Bjärred (SE); Rosenqvist, Fredrik, 254 51 Helsingborg (SE); Lindoff, Bengt, 237 35 Bjärred (SE)
(74) Representative: AWA Sweden AB

(57) **Abstract**

A method for ensuring a flow of heat transfer fluid in a district thermal energy distribution grid (120) comprising a feed conduit (130) and a return conduit (140) is presented. The method comprising: checking if a thermal energy extraction unit (310) connected to the district thermal energy distribution grid is called for delivering thermal energy; upon the thermal energy extraction unit (310) not being called for delivering thermal energy, opening a control valve (340) configured to control a flow of heat transfer fluid from the feed conduit (130) via the thermal energy extraction unit (310) to the return conduit (140), thereby achieving a by-pass from the feed conduit (130) to the return conduit (140). Also control unit for controlling a thermal energy extraction unit (310) is presented.

## Description

### Technical field

The present invention generally relates to district thermal energy distribution systems, and in particular to the control of flowrates in hydraulic district heating and cooling grids at low loads.

### Background

Large scale district heating and cooling grids typically face problems related to the large load ranges that the district grids are required to handle, especially related to low load situations.

For district heating grids low load situations usually occur during summertime and may result in the flowrate of heat transfer fluid being low or may even come to a complete stop. Consequently, the time it takes from the production of heat at the central heating plant, until the heat is consumed at the most remotely located buildings on the district grid becomes very long. This leads to significant cooling of the heat transfer fluid on the district grid, and failure to deliver heat transfer fluid at or above the specified minimum temperature.

Simply increasing the temperature of the heat transfer fluid output from the central heating plant would not solve the problem, as the consequence would be that the flowrate in the district grid would decrease even further, and thus the delivered temperature would drop even more. Further, the buildings closest to the central heating plant would receive an increased feed temperature and would therefore have difficulties in regulating the flowrate, as the required flowrate would be too low for the control valves to handle. Consequently, the control valve would frequently switch between open and closed positions, causing noise as well as considerable wear of the system leading to shortening of the life span of the equipment.

Contrary to district heating grids, district cooling grids usually experience low load situations during wintertime and may result in the flowrate of heat transfer fluid being low or may even come to a complete stop. Similarly, to the district heating grid, a low flowrate in a cooling grid will result in a temperature decrease of the heat transfer fluid. However, at wintertime the heat transfer fluid will risk freezing on the district grid, at least in the colder parts of the world. Freezing heat transfer fluid will clog the district grid and may also damage the conduits.

One available solution is to install fixed by-pass installations between the feed conduit and the return conduit, especially in the remote parts of the district grid, this in order to increase the flowrate on the district grid and thereby enable delivery of a temperature which is less dependent on the location on the district grid at which it is consumed. However, fixed by-pass installations would allow a continuous flow of heat transfer fluid even during high load situations, reducing the delivery capability of the district grid significantly. Adding a by-pass valve to the fixed by-pass installation, wherein the by-pass valve is controlled based on the temperature of the heat transfer fluid at the valve, would reduce the problems at high load, however both of these by-pass installations pose a weakness in the district grid as they are often welded in place which increases the risk of leaks leading to corrosion, and movements in the district grid may further lead to strain on the welding seams causing them to burst. Such damages may be difficult to find, as they are typically hidden under ground and the locations are often not well documented.

### Summary

It is an object of the present invention to solve at least some of the problems mentioned above.

According to a first aspect of the inventive concept, there is provided a method for ensuring a flow of heat transfer fluid in a district thermal energy distribution grid comprising a feed conduit and a return conduit. The method comprises: checking if a thermal energy extraction unit connected to the district thermal energy distribution grid is called for delivering thermal energy; upon the thermal energy extraction unit not being called for delivering thermal energy, opening a control valve configured to control a flow of heat transfer fluid from the feed conduit via the thermal energy extraction unit to the return conduit, thereby achieving a by-pass from the feed conduit to the return conduit.
district thermal energy distribution grid district thermal energy distribution grid district thermal energy distribution grid district thermal energy distribution grid. By the term "heat transfer fluid" is here meant any fluid, i.e. liquid or gas, suitable for transporting thermal energy in a district thermal energy distribution grid. Given as non-limiting examples, the heat transfer fluid may be water or oil.

By the term "district thermal energy distribution grid" is here meant a distribution grid that is configured to deliver thermal energy in the form of heat and/or cold. The district thermal energy distribution grid may be a district heating grid configured to deliver thermal energy in the form of heat. The district thermal energy distribution grid may be a district cooling grid configured to deliver thermal energy in the form of cold.

By the term "thermal energy extraction unit" is here meant a unit that is configured to extract thermal energy from the district thermal energy distribution grid. The thermal energy extraction unit may be a comfort heating heat exchanger. The thermal energy extraction unit may be a comfort cooling heat exchanger. However, other types of thermal energy extraction units may as well be used, such as heat pumps configured to extract thermal energy from the district thermal energy distribution grid. The thermal energy extraction unit is typically arranged locally in a substation of an individual building and is connected to the feed conduit and the return conduit of the district thermal energy distribution grid. The thermal energy extraction unit is further connected to, or forming part of, a local thermal energy distribution system. The local thermal energy distribution system is configured to distribute thermal energy, in the form of heat or cold, to a local building. The local thermal energy distribution system may be a local comfort heating system and/or a local comfort cooling system.

The purpose of the comfort heating heat exchanger is to extract heat from the district thermal energy distribution grid and transfer he extracted heat to the local comfort heating system, where it is used for comfort heating in the building, in order to create a comfortable environment with a pleasant air temperature. Analogous, the purpose of the comfort cooling heat exchanger is to extract cold from the district cooling grid and transfer it to the local comfort cooling system, where it is used for comfort cooling in a building in, in order to create a comfortable environment with a pleasant air temperature.

By delivering thermal energy is here meant delivering heat or cold.

To control the flowrate of heat transfer fluid through the thermal energy extraction unit, a control valve is arranged between the district thermal energy distribution grid and the thermal energy extraction unit. The control valve is arranged locally in the substation of an individual building, and thus not in the ground, enabling easy access to the control valve in case of maintenance. The control valve may be arranged between the feed conduit and an inlet of the thermal energy extraction unit, or it may alternatively be arranged between an outlet of the thermal energy extraction unit and the return conduit. It is also conceivable that an alternative arrangement may comprise two control valves, wherein one valve is arranged at the inlet and the other valve is arranged at the outlet of the thermal energy extraction unit.

By the expression "at an inlet" is in connection with the valve placement meant directly at an inlet to the thermal energy extraction unit, or within the connection between the thermal energy extraction unit and the feed conduit, or within the feed conduit adjacent to its connection to the inlet. Analogues, by the expression "at an outlet" is in connection with the valve placement meant directly at an outlet to the thermal energy extraction unit, or within the connection between the thermal energy extraction unit and the return conduit, or within the return conduit adjacent to its connection to the inlet.

In the case of the thermal energy extraction unit connected to the district thermal energy distribution grid being called for delivering thermal energy, the control valve is, in a conventional system, open in order to allow a flow of heat transfer fluid through the thermal energy extraction unit. In the case of the thermal energy extraction unit not being called for delivering thermal energy, the control valve is, in a conventional system, closed preventing a flow of heat transfer fluid through the thermal energy extraction unit. However, according to the present inventive concept, the control valve may be opened upon the thermal energy extraction unit not being called for delivering thermal energy, thereby achieving a by-pass from the feed conduit to the return conduit, locally at the substation of the individual building and via the thermal energy extraction unit.

By the present method a flow of heat transfer fluid is ensured through the local thermal energy extraction unit even in situation in which the thermal energy extraction unit is not being called for delivering thermal energy. Thus, the risk of heat transfer fluid being stationary on the district thermal energy distribution grid or running at very low flowrates for long periods of time is prevented. An advantage with the present method is that significant cooling of heat transfer fluid may be prevented which may otherwise jeopardize delivery of heat transfer fluid at the specified minimum feed temperature, to the most remotely located buildings on the district thermal energy distribution grid.

An additional advantage is that no, or very few, additional in-ground by-passes need to be installed on the district thermal energy distribution grid. In this manner, the weakness that such additional in-ground by-passes pose may be avoided, thereby lowering the risks of bursting welding seams and leaks on the in-ground parts of the district grid.

The method may further comprise determining a temperature of the heat transfer fluid at an inlet of the thermal energy extraction unit, wherein the step of opening the control valve is performed upon the temperature being below a predetermined threshold.

It should be understood that determination of the temperature may be achieved by any device or instrument suitable for measuring temperature. Given only as non-limiting examples, the temperature of the heat transfer fluid may be determined by the use of a thermometer or a thermo couple. Further, given as non-limiting examples, the temperature sensitive part of the measuring device or instrument may be arranged inside the conduit in direct contact with the heat transfer fluid or may be arranged to be in direct contact with an outer surface of the conduit, thus measuring the temperature of the heat transfer fluid indirectly via heat transfer through the conduit.

By the expression "at an inlet" is in connection with the determining of a temperature meant directly at an inlet to the thermal energy extraction unit, or within the connection between the thermal energy extraction unit and the feed conduit, or within the feed conduit adjacent to its connection to the inlet. Analogues, by the expression "at an outlet" is in connection with the determining of a temperature meant directly at an outlet to the thermal energy extraction unit, or within the connection between the thermal energy extraction unit and the return conduit, or within the return conduit adjacent to its connection to the inlet.

In the manner described above, in the case of the thermal energy extraction unit not being called for delivering thermal energy, the control valve may be closed, preventing flow of heat transfer fluid through the thermal energy extraction unit, until the feed temperature of the heat transfer fluid has passed below a predefined threshold. When the feed temperature of the heat transfer fluid has passed below the predefined threshold, the control valve may opened and thereby achieving a by-pass from the feed conduit to the return conduit, locally at the substation of the individual building and via the thermal energy extraction unit. By the present method a flow through the thermal energy extraction unit may be provided only when the thermal energy extraction unit being called for delivering thermal energy, or when heat transfer fluid has cooled down significantly. The present method may prevent continuous flow through the thermal energy extraction unit and may in this manner prevent unnecessary loss of efficiency.

The method may further comprise determining a time period during which the thermal energy extraction unit is not called for delivering thermal energy, wherein the step of opening the control valve is performed upon the time period being above a predetermined threshold.

If, for example, the thermal conductivity or the cooling characteristics of the insulation of the conduits is well-known, it may be possible to estimate how much the heat transfer fluid has cooled down based on the time the control valve has been closed.

By the present method a flow through the thermal energy extraction unit may be provided only when the thermal energy extraction unit is being called for delivering heat or cold, or when a predefined time period has passed during which the control valve has been closed, and during which the heat transfer fluid in the feed conduit is expected to have cooled down significantly. The present method may prevent continuous flow through the thermal energy extraction unit at all times, and may in this manner prevent unnecessary loss of efficiency.

According to a second aspect of the inventive concept, there is provided a control unit for controlling a thermal energy extraction unit connected to a district thermal energy distribution grid comprising a feed conduit and a return conduit. The control unit comprises a communication module configured to receive a thermal energy demand signal from a local thermal energy system configured to extract heat from the district thermal energy distribution grid via the thermal energy extraction unit. The control unit further comprises a control circuit configured to execute different functions. The control circuit is configured to execute a checking function and a by-pass function. The checking function is configured to check if the received thermal energy demand signal is indicative of the thermal energy extraction unit being called for delivering thermal energy to the local thermal energy system or check if a thermal energy demand signal is received at all. The by-pass function (510) configured to, upon the thermal energy demand signal not being indicative of the thermal energy extraction unit being called for delivering thermal energy to the local thermal energy system or if no thermal energy demand signal is received, generate an opening signal for a control valve configured to control a flow of heat transfer fluid from the feed conduit via the thermal energy extraction unit to the return conduit. The communication module is further configured to send the opening signal to the control valve.

By the term "local thermal energy system" is here meant a system configured to extract thermal energy from the district thermal energy distribution grid via the thermal energy extraction unit with the purpose of providing comfort heating or comfort cooling in the building, in order to create a comfortable environment with a pleasant air temperature. The local thermal energy system may be a local comfort heating system. The local thermal energy system may be a local comfort cooling system.

By the term "control unit" is here meant any unit or device capable of receiving a thermal energy demand signal from a local thermal energy system, determining if the received thermal energy demand signal is indicative or not of the thermal energy extraction unit being called for delivering thermal energy, and if it is not, generating an opening signal for a control valve and transmitting said signal. It should be understood that reception and transmission may be done either by wired connection, wireless connection, or a combination thereof. By way of example, the control unit may be, but is not limited to, a control unit connectable to a Building Management System (BMS) of a building. The control unit may be able to receive a thermal energy demand signal from the comfort heating system, via the BMS. The control unit may further be able to take control of the control valve by sending an opening signal to the control valve, via the BMS, thereby achieving a by-pass from the feed conduit to the return conduit, locally at the substation of the individual building and via the thermal energy extraction unit. The thermal energy demand signal may be a signal demanding heat and/or cold.

Effects, features and advantages of the second aspect are largely analogous to those described above in connection with the first aspect. In order to avoid undue repetition reference is made to the above.

An additional advantage with the present arrangement is that it may facilitate communication with, and control of devices already present in a local thermal energy system and a local substation of an individual building.

The communication module may be configured to receive a temperature signal indicative of a temperature of the heat transfer fluid at an inlet of the thermal energy extraction unit. The by-pass function may be configured to generate the opening signal upon the temperature being below a predetermined threshold.

The control circuit may further comprise a clock. The control circuit may be configured to determine a time period during which the thermal energy extraction unit is not called for delivering thermal energy. The by-pass function may be configured to generate the opening signal upon the time period being above a predetermined threshold.

According to a third aspect of the inventive concept, there is provided a system. The system comprising: a thermal energy extraction unit connected to a district thermal energy distribution grid comprising a feed conduit and a return conduit; a control valve configured to control a flow of heat transfer fluid of the district thermal energy distribution grid from the feed conduit via the thermal energy extraction unit to the return conduit; and a control unit according to the second aspect, wherein the control valve upon receiving the opening signal is set to be open, such that a by-pass from the feed conduit to the return conduit is formed.

Effects, features and advantages of the third aspect is largely analogous to those described above in connection with the first and second aspects.

Other objectives, features, and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present inventive concept, will be better understood through the following illustrative and non-limiting detailed description of preferred embodiments of the present inventive concept, with reference to the appended drawings, where the same reference numerals will be used for similar elements, wherein:
Fig. 1A schematically illustrates an example of a prior art energy distribution system in the form of a district heating system.
Fig. 1B schematically illustrates an example of a prior art energy distribution system in the form of a district cooling system.
Fig. 2A schematically illustrates an example of a local system for indoor comfort heating, according to an embodiment of the present inventive concept.
Fig. 2B schematically illustrates an example of a local system for indoor comfort cooling, according to an embodiment of the present inventive concept.
Fig. 3 is a schematic diagram of a control unit configured to control a local thermal energy system, e.g. the local system for indoor comfort heating illustrated in connection with Fig. 2A and the local system for indoor comfort cooling illustrated in connection with Fig. 2B.
Fig. 4 shows a schematic block diagram illustrating a method for ensuring a flow of heat transfer fluid in a district grid comprising a feed conduit and a return conduit.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

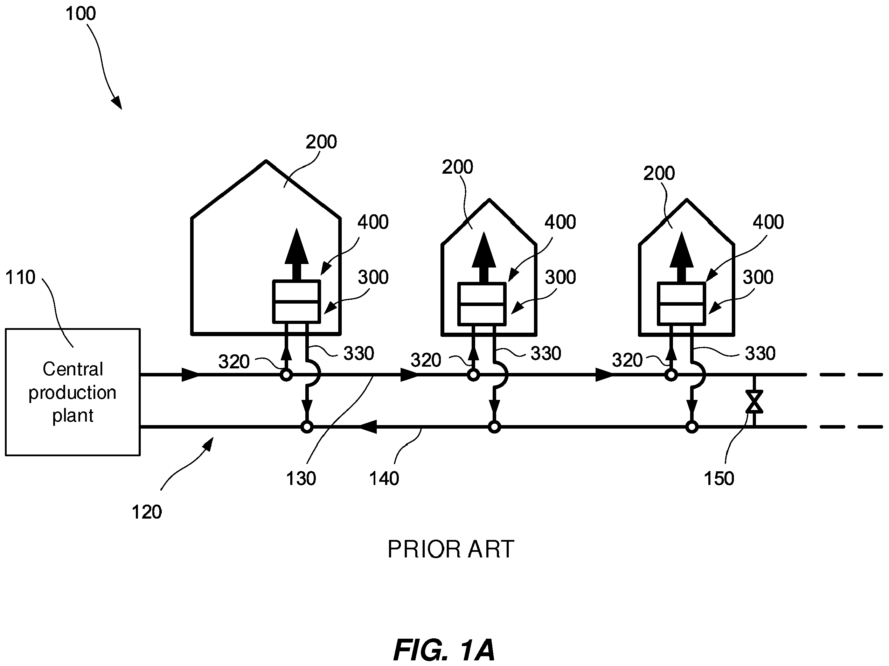

Fig. 1A schematically illustrates an example of a prior art energy distribution system 100 in the form of a district heating system. The energy distribution system 100 comprises a central production plant 110, in the form of a central heat production plant at which heat transfer fluid is heated. The energy distribution system 100 further comprises a district grid 120 in the form of a district heating grid. The district grid 120 is formed by one or more hydraulic networks comprising feed conduits 130 and return conduits 140. Through the feed conduits 130 heat transfer fluid is transported from the central production plant 110 via inlets 320 to substations 300 arranged in buildings 200, such as residential homes, office buildings or industrial factories, connected to the district grid. The substations 300 are configured to provide comfort heating via comfort heating systems 400 and/or hot tap water to the respective buildings 200. In this process heat of the heat transfer fluid is consumed, and the temperature of the heat transfer fluid is thus lowered in the substations 300. The cooled heat transfer fluid leaves the substations 300 via outlets 330 and is transported back to the central production plant 110 through return conduits 140.

In district heating systems 100 the heat transfer fluid is typically water, although other fluids suitable for transporting heat may also be used. The product of a district heating system is defined as the feed temperature never reaching below a predefined temperature level. Typically, the temperature in the feed conduits 130 is in the range of 50-120°C. However, in systems arranged not just for providing comfort heating but also for providing heating of tap water, the feed temperature should always be 60°C or above, in order to avoid problems with legionella. The return temperature in the return conduits 140 is typically in the range of 40-60°C.

During summertime the demand for heating is generally low, and at such low load situations the flowrate of heat transfer fluid on the district grid 120 is low or may even come to a complete stop. The time the heat transfer fluid spends out in the district grid 120 thus becomes very long, sometimes several hours. Despite the feed conduits 130 being provided with heat insulation, the long time results in significant cooling of the heat transfer fluid. This, in turn, may lead to failure to deliver heat transfer fluid at or above the specified minimum temperature, to the most remotely located buildings 200 on the district grid 120.

It is known from prior art that the problem may be solved by installing by-pass installations 150 between the feed conduit 130 and the return conduit 140, as shown in Fig. 1A. The purpose of such by-pass installations 150 is to increase the flowrate on the district grid 120 and thereby decrease the time the heat transfer fluid spends on the district grid 120, thus reducing the temperature decrease in the feed conduit 130. However, as previously discussed such by-pass installations 150 suffer from a number of drawbacks, and there is therefore a desire to avoid such by-pass installations 150.

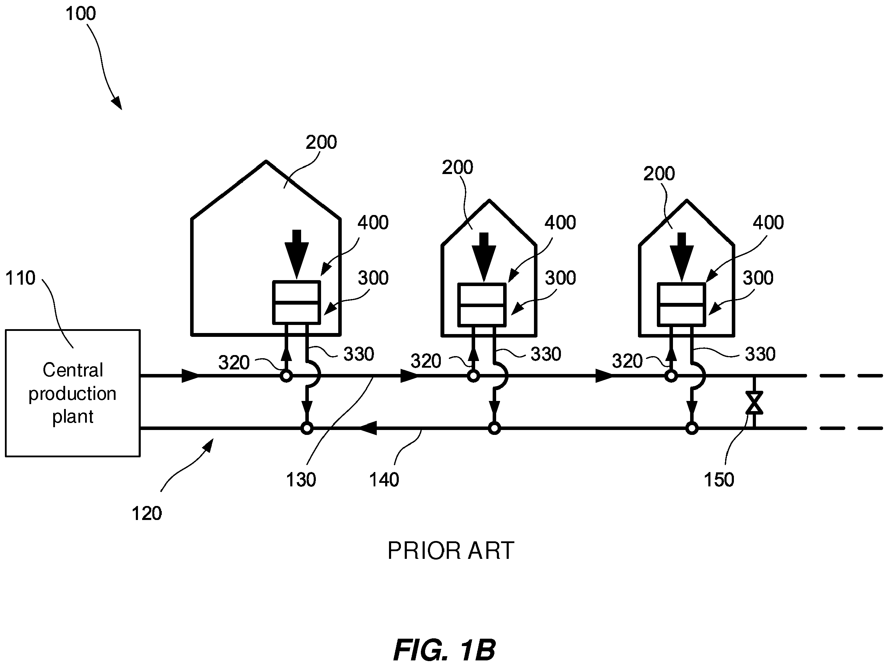

Fig. 1B schematically illustrates an example of a prior art energy distribution system 100 in the form of a district cooling system. A district cooling system largely comprises the same components and shows a number of features analogous to that of a district heating system, the main difference being the purpose of providing comfort cooling instead of heating. At the central production plant 110, here in the form of a central cold production plant, heat transfer fluid is cooled and distributed to buildings 200 on the district cooling grid 120. The temperature of the heat transfer fluid in the feed conduit 130 is typically in the range of 4-12°C, whereas the temperature in the return conduit is typically in the range of 10-18°C.

Energy distribution systems 100 arranged for district cooling usually experience low load situations during wintertime, as the demand for comfort cooling is generally low. At such low load situations, the flowrate of heat transfer fluid on the district cooling grid 120 may be low or may even come to a complete stop. A low flowrate in a cooling grid may result in a temperature decrease of the heat transfer fluid, and the heat transfer fluid will risk freezing on the district grid, at least in the colder parts of the world. Freezing heat transfer fluid will clog the district grid and may also damage the conduits, which is unacceptable.

The solution of installing by-pass installations 150 between the feed conduit 130 and the return conduit 140 in the district grid 120, as discussed for district heating systems is also applicable to district cooling systems. In this manner the flowrate of heat transfer fluid on the district grid is increased, but as previously discussed such by-pass installations 150 suffer from a number of drawbacks and is preferably avoided.

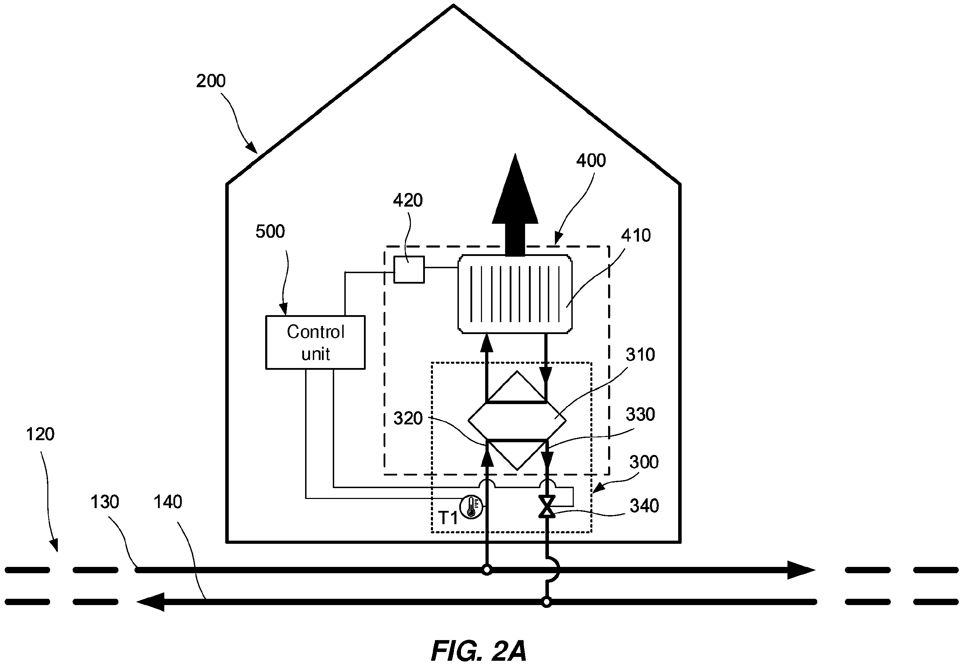

Fig. 2A schematically illustrates an example of a local system for indoor comfort heating, according to an embodiment of the present inventive concept. Similar to the prior art previously discussed, heated heat transfer fluid is transported from the central production plant 110 through the feed conduit 130 of the district grid 120. At a building 200 connected to the district grid 120, heat transfer fluid is delivered via the inlet 320 to a thermal energy extraction unit 310, in the present example a comfort heating heat exchanger, of the substation 300. The inlet 320 may be provided with an instrument T1 measuring the temperature of the heat transfer fluid prior to it reaching the thermal energy extraction unit 310. Measuring the temperature at the inlet 320 is a preferred embodiment, however it should be understood that the temperature measuring instrument T1 may alternatively be arranged to measure the temperature at other locations, such as at the outlet 330 or at the feed conduit adjacent to the building 200. The substation 300 further comprises a control valve 340, arranged to control the flowrate of heat transfer fluid through the thermal energy extraction unit 310. In the present embodiment, the control valve 340 is arranged at the outlet 330 from the thermal energy extraction unit 310, however it should be understood that the control valve 340 may be arranged at other locations, such as at the inlet 320, or there may be a control valve 340 arranged at both the inlet 320 and the outlet 330. From the outlet 330 heat transfer fluid is transported to the return conduit through which it is returned to the central production plant.

In the thermal energy extraction unit 310, heat from heat transfer fluid from the district heating grid 120 is transferred to a second circuit circulation heat transfer fluid through a heat emitter 410. The heat emitter 410 is a part of a local comfort heating system 400, arranged to extract heat from the district heating grid 120 and deliver heat to the heat emitter 410 for the purpose of heating air in the building 200, in order to create a comfortable environment with a pleasant air temperature.

The local comfort heating system 400 further comprises a demand sensor 420 connected to the heat emitter 410. The demand sensor 420 may determine data pertaining to thermal energy demands, e.g. heating demands, of the heat emitter 410. The demand sensor 420 sends a thermal energy demand signal to a control unit 500. When the thermal energy demand signal from the demand sensor 420 is indicative of the thermal energy extraction unit 310 being called for delivering heat to the local comfort heating system 400, the control unit 500regulates the control valve 340 to be open. The opening of the control valve 340 allows heat transfer fluid to flow from the feed conduit 130 through the thermal energy extraction unit310 and out to the return conduit, in this manner delivering heat to the local comfort heating system 400.

When the thermal energy demand signal from the demand sensor 420 is not indicative of the thermal energy extraction unit 310 being called for delivering heat, thus when heating is not demanded by the heat emitter 410, the control unit 500 typically regulates the control valve 340 to be closed. Consequently, heat transfer fluid from the district grid 120 may no longer flow though the thermal energy extraction unit 310.

It should be understood that opening and closing of the control valve 340, may be achieved by simply switching from e.g. fully open to fully closed, but it may also be achieved by gradually opening and closing the control valve 340, or controlling the control valve 340 such that it is put in a state at which the control valve 340 is only partially opened, allowing a flow but at a lower flowrate than compared to when the control valve 340 is fully open.

At low load situation when the thermal energy extraction unit 310 is not called for delivering heat for long periods of time, the flowrate on the district grid may be very low or the flow may have come to a complete stop. This leads to significant cooling of the heat transfer fluid on the district grid 120 and may result in failure to deliver heat transfer fluid at or above the specified minimum temperature.

However, when the thermal energy extraction unit 310 is not being called for delivering heat, as indicated by the demand sensor 420, the control unit 500 may take control of the opening and closing of the control valve 340, according to the present inventive concept. The control unit 500 comprises a control circuit configured to check whether or not the received heat demand signal is indicative of the thermal energy extraction unit 310 being called for delivering heat to the local comfort heating system 400. The control circuit is further configured to generate an opening signal for the control valve 340, only if the thermal energy demand signal is not indicative of the thermal energy extraction unit 310 being called for delivering heat. The control unit 500 sends the opening signal to the control valve 340 which is opened. Thereby a by-pass from the feed conduit 130 to the return conduit 140 is achieved locally at the substation 300 of the individual building 200 and via the thermal energy extraction unit 310, by controlling the control valve 340 already present in the substation 300.

In the manner described above, circulation of heat transfer fluid on the district grid is ensured even during low load situations. Significant cooling of heat transfer fluid may thereby be prevented, enabling delivery of heat transfer fluid at the specified minimum feed temperature, even to the most remotely located buildings 200 on the district grid 120. Further, the need for in-ground by-passes on the district grid 120 may be eliminated. The weaknesses that in-ground by-passes pose may thus be avoided, thereby lowering the risks of bursting welding seams and leaks on the in-ground parts of the district grid.

It is conceivable that the control unit 500, after having concluded that the thermal energy extraction unit 310 is not being called for delivering heat, may send an opening signal to the control valve 340 immediately.

It is further conceivable that the control unit 500, after having concluded that the thermal energy extraction unit 310 is not being called for delivering heat, may alternatively perform a check of whether there is a need for achieving a local by-pass from the feed conduit 130 to the return conduit 140 prior to sending an opening signal to the control valve 340.

Such a check may be conducted in the following manner. The information on feed temperature of the heat transfer fluid from instrument T1 is provided to the control unit 500. The control circuit in the control unit 500 is further configured to generate the opening signal for the control valve 340 only upon the temperature being below a predetermined threshold. One purpose for such a check may be that a local by-pass from the feed conduit 130 to the return conduit 140 is only required when noticeable cooling of the heat transfer fluid has occurred.

In an alternative embodiment, the control circuit in the control unit 500 may comprise a clock configured to determine the time period during which the thermal energy extraction unit 310 is not called for delivering heat. The control circuit is further configured to generate the opening signal for the control valve 340 only upon the time period being above a predetermined threshold. One purpose of such a check may be that the thermal conductivity or the cooling characteristics of the insulation of the conduits 130,140 is well-known, and it may therefore be possible to estimate how long time it takes for significant cooling of the heat transfer fluid to have occurred.

It should be understood that a system according to the inventive concept may comprise either the temperature check, or the time period check, or a combination thereof.

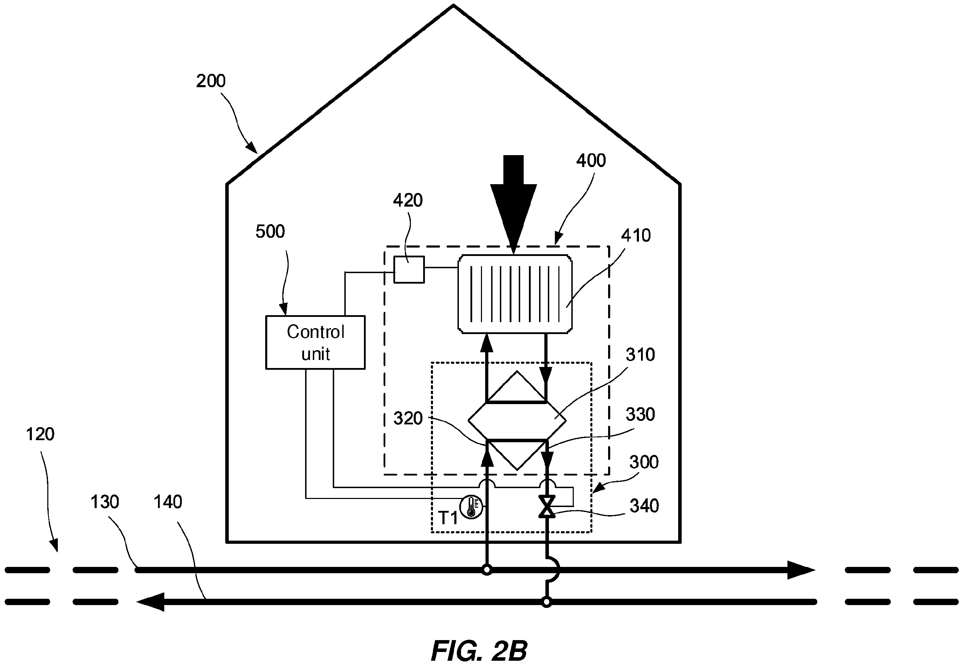

Fig. 2B schematically illustrates an example of a local system for indoor comfort cooling, according to an embodiment of the present inventive concept. A district cooling system largely comprises the same components and shows a number of features analogous to that of a district heating system, the main difference being the purpose of providing comfort cooling instead of heating.

Cooled heat transfer fluid is delivered via the district cooling grid 120 to the substation 300, in which the thermal energy extraction unit 310 in the present example is a comfort cooling heat exchanger. The substation 300 further comprises a control valve 340, arranged to control the flowrate of heat transfer fluid through the thermal energy extraction unit 310, and an instrument T1 may be provided for measuring the feed temperature.

In the thermal energy extraction unit 310, cold from heat transfer fluid from the district cooling grid 120 is transferred to a second circuit circulation heat transfer fluid through a cooler 410. The cooler 410 is a part of a local comfort cooling system 400, arranged to extract cold from the district cooling grid 120 and deliver cold to the cooler 410 for the purpose of cooling air in the building 200, in order to create a comfortable environment with a pleasant air temperature.

The local comfort cooling system 400 further comprises a demand sensor 420 sending a thermal energy demand signal to a control unit 500. When the thermal energy demand signal from the sensor 420 is indicative of the thermal energy extraction unit 310 being called for delivering cold to the local comfort cooling system 400, the control unit 500 regulates the control valve 340 to be open. When the thermal energy demand signal from the sensor 420 is not indicative of the thermal energy extraction unit 310 being called for delivering cold to the local comfort cooling system 400, the control unit 500 typically regulates the control valve 340 to be closed.

At low load situation, typically during wintertime, when the thermal energy extraction unit 310 is not called for delivering cold for long periods of time, the flowrate on the district grid may be very low or the flow may have come to a complete stop. This leads to significant cooling of the heat transfer fluid on the district grid 120 and may result in failure to deliver heat transfer fluid at or above the specified minimum temperature. Furthermore, the heat transfer fluid may risk freezing in the district grid, at least in the colder parts of the world. Freezing heat transfer fluid may clog the district grid and may also damage the conduits.

However, when the thermal energy extraction unit 310 is not being called for delivering cold, as indicated by the demand sensor 420, the control unit 500 may take control of the opening and closing of the control valve 340, according to the present inventive concept. The control unit 500 comprises a control circuit configured to send an opening signal for the control valve 340, only if the heat demand signal is not indicative of the thermal energy extraction unit 310 being called for delivering heat. It is conceivable that the control unit 500 may either send an opening signal to the control valve 340 immediately or after having performed a further check of whether there is a need for achieving a local by-pass from the feed conduit 130 to the return conduit 140 prior to sending an opening signal to the control valve 340. Such a check may be either a temperature check based on the feed temperature reading from instrument T1, or the time period check, or a combination thereof.

By controlling the control valve 340 already present in the substation 300, a by-pass from the feed conduit 130 to the return conduit 140 is achieved locally at the substation 300 of the individual building 200 and via the thermal energy extraction unit 310. Circulation of heat transfer fluid on the district grid is thereby ensured even during low load situations. Significant cooling of heat transfer fluid may thereby be prevented, and thus the risk of damaging the conduits due to freezing heat transfer fluid may be lowered. Further, the need for in-ground by-passes on the district grid 120 may be eliminated. The weaknesses that in-ground by-passes pose may thus be avoided, thereby lowering the risks of bursting welding seams and leaks on the in-ground parts of the district grid.

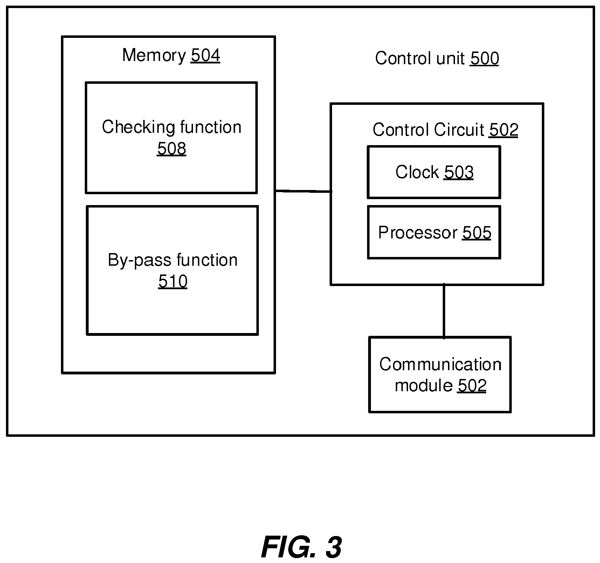

The control unit 500 is illustrated in more detail in connection with Fig. 3. The control unit 500 is working the same for both the local system for indoor comfort heating illustrated in connection with Fig. 2A and the local system for indoor comfort cooling illustrated in connection with Fig. 2B. The control unit 500 comprises a communication module 502, a control circuit 504 and possibly also a memory 506.

The communication module 502 is configured to communicate with a local thermal energy system 400, especially with the demand sensor 420 of the local thermal energy system 400. The communication module 502 is configured to communicate with the control valve 340. The communication path over which the communication is made may be wired or wireless. The communication may include data transfers, and the like. Data transfers may include, but are not limited to, downloading and/or uploading data and receiving or sending messages. The data may be processed by the control unit 500. The processing may include storing the data in a memory, e.g., the memory 506 of the control unit 500, executing operations or functions, and so forth.

Hence, the communication module 502 is configured to receive a thermal energy demand signal from a local thermal energy system 400, e.g. the local system for indoor comfort heating or the local system for indoor comfort cooling. Hence, the communication module 502 is configured to receive a thermal energy demand signal from a local thermal energy system 400.

The control circuit 504 is configured to carry out overall control of functions and operations of the control unit 500. The control circuit 504 may include a processor 505, such as a central processing unit (CPU), microcontroller, or microprocessor. The processor 505 is configured to execute program code stored in the memory 506, in order to carry out functions and operations of the control unit 500.

The memory 506 may be one or more of a buffer, a flash memory, a hard drive, a removable media, a volatile memory, a non-volatile memory, a random access memory (RAM), or other suitable devices. In a typical arrangement, the memory 506 may include a non-volatile memory for long term data storage and a volatile memory that functions as system memory for the control circuit 504. The memory 506 may exchange data with the control circuit 504 over a data bus. Accompanying control lines and an address bus between the memory 506 and the control circuit 504 also may be present.

Functions and operations of the control unit 500 may be embodied in the form of executable logic routines (e.g., lines of code, software programs, etc.) that are stored on a non-transitory computer readable medium (e.g., the memory 506) of the control unit 500 and are executed by the control circuit 504 (e.g., using the processor 505). Furthermore, the functions and operations of the control unit 500 may be a stand-alone software application or form a part of a software application that carries out additional tasks related to the control unit 500. The described functions and operations may be considering a method that the corresponding device is configured to carry out. Also, while the described functions and operations may be implemented in software, such functionality may as well be carried out via dedicated hardware or firmware, or some combination of hardware, firmware and/or software.

The control circuit 504 is configured to execute a checking function 508. The checking function 508 is configured to check if the received thermal energy demand signal is indicative of the thermal energy extraction unit 310 being called for delivering thermal energy to the local thermal energy system 400 or check if a thermal energy demand signal is received at all.

The control circuit 504 is configured to execute a by-pass function 510. The by-pass function 510 is configured to, upon the thermal energy demand signal not being indicative of the thermal energy extraction unit 310 being called for delivering thermal energy to the local thermal energy system 400 or if no thermal energy demand signal is received, generate an opening signal for the control valve 340 configured to control a flow of heat transfer fluid from the feed conduit 130 via the thermal energy extraction unit 310 to the return conduit 140.

The communication module 502 may further be configured to receive a temperature signal indicative of a temperature of the heat transfer fluid at an inlet of the thermal energy extraction unit. Such a temperature signal may be received from the instrument T1. The by-pass function 510 may be configured to generate the opening signal upon the temperature of the heat transfer fluid at the inlet of the thermal energy extraction unit being below a predetermined threshold.

The control circuit 502 may further comprises a clock 503. The clock 503 may be used to determine a time period during which the thermal energy extraction unit 310 is not called for delivering thermal energy. The by-pass function 510 may be configured to generate the opening signal upon the time period being above a predetermined threshold.

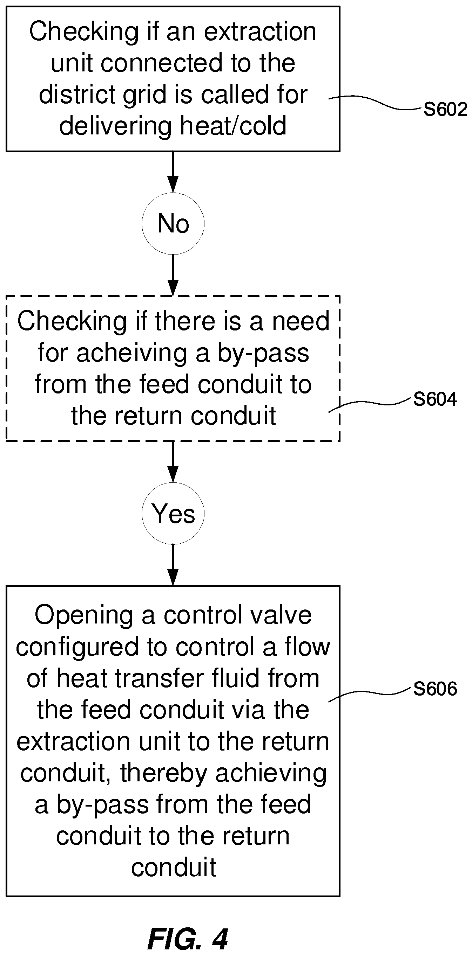

Fig. 4 shows a schematic block diagram illustrating a method for ensuring a flow of heat transfer fluid on a district thermal energy distribution grid 120 comprising a feed conduit 130 and a return conduit 140. The district thermal energy distribution grid may be a district heating grid. The district grid may be a district cooling grid. The method comprises one or more of the following steps. It should be understood that the steps may be performed in any order suitable.

Checking S602 if an thermal energy extraction unit 310 connected to the district thermal energy distribution grid 120 is called for delivering thermal energy (heat or cold) to a local comfort heating or cooling system 400.

Upon the thermal energy extraction unit 310 not being called for delivering thermal energy to the local comfort heating or cooling system 400, optionally check S604 if there is a need for achieving a by-pass from the feed conduit 130 to the return conduit 140. It should be understood that there may be implementations of the method in which the optional check S604 is included, and that there may be implementations of the method in which the optional check S604 is not included. The optional check S604 may comprise determining a temperature of the heat transfer fluid at an inlet of the thermal energy extraction unit 310, and only upon the temperature being below a predetermined threshold confirming a need for achieving a by-pass from the feed conduit 130 to the return conduit 140. The optional check S604 may comprise determining a time period during which the thermal energy extraction unit 310 is not called for delivering heat, and only upon the time period being above a predetermined threshold confirming a need for achieving a by-pass from the feed conduit 130 to the return conduit 140.

Upon the thermal energy extraction unit 310 not being called for delivering thermal energy to the local comfort heating or cooling system 400, and the optional check S604, if performed, confirming a need for achieving a by-pass from the feed conduit 130 to the return conduit 140, opening S606 a control valve 340 configured to control a flow of heat transfer fluid from the feed conduit 130 via the thermal energy extraction unit 310 to the return conduit 140, thereby achieving a by-pass from the feed conduit 130 to the return conduit 140.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

For example, in the embodiments shown in Fig. 2A and 2B, the control valve 340 is arranged at the outlet 330 from the thermal energy extraction unit 310. However, it should be understood that the control valve 340 may be arranged at other locations, such as at the inlet 320, or there may be a control valve 340 arranged at both the inlet 320 and the outlet 330.

In the embodiments shown in Fig. 2A and 2B, the instrument T1 measuring the temperature of the heat transfer fluid is arranged at the inlet 320. However, it should be understood that the instrument T1 may alternatively be arranged to measure the temperature at other locations, such as at the outlet 330 or at the feed conduit adjacent to the building 200.

In the embodiments shown in Fig. 2A and 2B, the thermal energy extraction unit 310 is described as being a comfort heating heat exchanger and a comfort cooling heat exchanger, respectively. However, it is conceivable that the extraction unit 310 may also be of other types, such as a comfort heating heat pump or a comfort cooling heat pump.

Further, in relation to the embodiments shown in Fig. 2A and 2B, the control unit 500 is described as a separate unit connectable to different parts of the system. However, it is also conceivable that the control unit 500 may be a control unit connectable to a Building Management System (BMS) already present in building 200 possibly as a part of the comfort heating or cooling system 400. The control unit 500 may be able to receive a demand signal from the comfort heating or cooling system 400, via the BMS. The control unit 500 may further be able to take control of the control valve 340 by sending an opening signal to the control valve 340, via the BMS, thereby achieving a by-pass from the feed conduit 130 to the return conduit 140, locally at the substation 300 of the individual building 200 and via the thermal energy extraction unit 310.

Moreover, as an alternative of being a district heating or district cooling grid, the district grid 120 may be a combined district heating and cooling grid as previously disclosed in, e.g., WO 2017/076868 filed by E.ON Sverige AB. In such as case, the feed conduit 130 is sometimes to be seen as the hot conduit disclosed in WO 2017/076868 and sometimes to be seen as the cold conduit disclosed in WO 2017/076868. Further, the return conduit 140 is sometimes to be seen as the hot conduit disclosed in WO 2017/076868 and sometimes to be seen as the cold conduit disclosed in WO 2017/076868. When the feed conduit 130 is seen to be the hot conduit disclosed in WO 2017/076868 the return conduit 140 is seen to be the cold conduit disclosed in WO 2017/076868 and vice versa. By ensuring a flow of heat transfer fluid in the combined district heating and cooling grid of WO 2017/076868 using the present invention islanding in the combined district heating and cooling grid may be avoided. With islanding is here meant that the heat transfer fluid in the combined district heating and cooling grid is standing still during a predetermined time period. The predetermined time period may be in the order of hours to days.

## Claims

1. A method for ensuring a flow of heat transfer fluid in a district thermal energy distribution grid (120) comprising a feed conduit (130) and a return conduit (140), the method comprising:
checking (S602) if a thermal energy extraction unit (310) connected to the district thermal energy distribution grid (120) is called for delivering thermal energy;
upon the thermal energy extraction unit (310) not being called for delivering thermal energy, opening (S606) a control valve (340) configured to control a flow of heat transfer fluid from the feed conduit (130) via the thermal energy extraction unit (310) to the return conduit (140), thereby achieving a by-pass from the feed conduit (130) to the return conduit (140).

2. The method according to claim 1, further comprising determining a temperature of the heat transfer fluid at an inlet (320) of the thermal energy extraction unit (310), wherein the step of opening the control valve (340) is performed upon the temperature being below a predetermined threshold.

3. The method according to claim 1 or 2, further comprising determining a time period during which the thermal energy extraction unit (310) is not called for delivering thermal energy, wherein the step of opening (S606) the control valve (340) is performed upon the time period being above a predetermined threshold.

4. A control unit for controlling a thermal energy extraction unit (310) connected to a district thermal energy distribution grid (120) comprising a feed conduit (130) and a return conduit (140), the control unit comprising:
a communication module (502) configured to receive a thermal energy demand signal from a local thermal energy system (400) configured to extract thermal energy from the district thermal energy distribution grid (120) via the thermal energy extraction unit (310);
a control circuit (502) configured to execute:
a checking function (508) configured to check if the received thermal energy demand signal is indicative of the thermal energy extraction unit being called for delivering thermal energy to the local thermal energy system or check if a thermal energy demand signal is received at all,
a by-pass function (510) configured to, upon the thermal energy demand signal not being indicative of the thermal energy extraction unit (310) being called for delivering thermal energy to the local thermal energy system (400) or if no thermal energy demand signal is received, generate an opening signal for a control valve (340) configured to control a flow of heat transfer fluid from the feed conduit (130) via the thermal energy extraction unit (310) to the return conduit (140); and
a communication module (502) is further configured to send the opening signal to the control valve.

5. The control unit according to claim 4,
wherein the communication module (502) is further configured to receive a temperature signal indicative of a temperature of the heat transfer fluid at an inlet of the thermal energy extraction unit,
wherein the by-pass function (510) is further configured to generate the opening signal upon the temperature being below a predetermined threshold.

6. The control unit according to claim 4 or 5,
wherein the control circuit (502) further comprises a clock (503), wherein the control circuit (502) is further configured to determine a time period during which the thermal energy extraction unit (310) is not called for delivering thermal energy,
wherein the by-pass function (510) is further configured to generate the opening signal upon the time period being above a predetermined threshold.

7. A system comprising:
a thermal energy extraction unit (310) connected to a district thermal energy distribution grid (120) comprising a feed conduit (130) and a return conduit (140);
a control valve (340) configured to control a flow of heat transfer fluid of the district thermal energy distribution grid (120) from the feed conduit (130) via the thermal energy extraction unit (310) to the return conduit (140); and
a control unit (500) according to any one of claims 4-6,
wherein the control valve (340) upon receiving the opening signal is set to be open, such that a by-pass from the feed conduit (130) to the return conduit (140) is formed.
